# EUROPÄISCHE PATENTSCHRIFT

(11) **EP 0 545 952 B1**
(45) Veröffentlichungstag und Bekanntmachung des Hinweises auf die Patenterteilung: **27.07.1994**
(21) Anmeldenummer: 91913757.0
(22) Anmeldetag: 10.08.1991
(51) Int. Cl.: G01B 3/00, G01B 5/00, G01B 13/00, B23Q 35/36

(54) **ZENTRIEREINRICHTUNG FÜR EINEN MECHANISCHEN TASTKOPF**
ALIGNMENT DEVICE FOR A MECHANICAL PROBE
DISPOSITIF DE CENTRAGE POUR UN PALPEUR MECANIQUE

(30) Priorität: 28.08.1990 DE 4027136
(43) Veröffentlichungstag der Anmeldung: 16.06.1993
(73) Patentinhaber: Leitz Messtechnik Gesellschaft mit beschränkter Haftung, D-35530 Wetzlar (DE)
(72) Erfinder: LINDNER, Matthias, D-6350 Bad Nauheim (DE); PHILIPP, Michael, D-6324 Feldatal 1 (DE)
(74) Vertreter: Knefel, Siegfried, Dipl.-Math.
(86) Internationale Anmeldenummer: DE9100642
(87) Internationale Veröffentlichungsnummer: WO9203695

(56) Entgegenhaltungen:
- EP-A- 0 223 970
- CH-A- 481 367
- DE-A- 2 948 712

## Beschreibung

Die Erfindung betrifft eine Zentriereinrichtung für den Taststift in einem mechanischen Tastkopf mit einem mit dem Taststift verbundenen Mitnehmer und mit zwei in gegensätzlichen Richtungen darauf wirkenden Rückstellmitteln.

Eine solche Zentriereinrichtung ist bekannt aus der DE- AC- 23 56 030, insbesondere Anspruch 2 und Fig. 1.

Dort dient sie im Zusammenwirken mit der Ausbildung des Mitnehmers als Biegestab vorrangig der Variation der Federkonstanten als Funktion des Weges.

Der Mitnehmer trägt an seinem Ende eine Kugel. Beidseitig wirken Federn gleicher Federkonstante über plane Druckstücke auf diese. Eine Anordnung von drei Kugeln wirkt auf beide Druckstücke jeweils unabhängig als erster und als zweiter Anschlag.

Um eine einwandfreie und hysteresefreie Zentrierung in der Grundstellung zu gewährleisten, müssen alle vorgesehenen Berührungsstellen zwischen der Kugel des Mitnehmers, den Kugeln der Anschläge und den Druckstücken zugleich exakt anliegen.

Das ist nur mit hohem Fertigungsaufwand für Präzisionskugeln und in optischer Qualität plane Druckstücke möglich.

Im Gebrauch mindert sich diese Qualität zwangsläufig durch Verschleiß durch Schlagwirkung und Reibung der Kugel des Mitnehmers an den Druckstücken.

Es ist daher die Aufgabe der Erfindung, eine gattungsgemäße Zentriervorrichtung zu schaffen, die bei gleicher Präzision mit deutlich verringertem Fertigungsaufwand auskommt. Bei Verschleiß im Dauereinsatz soll eine erhöhte Hysterese ausgeschlossen werden.

Gelöst wird diese Aufgabe durch die Merkmale des Anspruchs 1.

Vorteilhafte Ausführungsformen sind Gegenstand der abhängigen Ansprüche 2 bis 7.

Die Ausführung nach den Ansprüchen 2 und 3 mit Federn, insbesondere Spiralfedern, ist besonders einfach. Die Federrückstellkraft steigt mit der Auslenkung.

Mit Fluidtechnik nach den Ansprüchen 4 bis 7 ist die Rückstellkraft unabhängig von der Auslenkung. Die fluidische Lagerung nach Anspruch 6 ergibt durch gezielte Nutzung des Lecks zwischen Kolben und Zylinder eine besonders ruckfreie Bewegung. Druckluft als Fluid nach Anspruch 7 ist problemlos, da sie an Koordinatenmeßmaschinen ohnehin für Luftlager u. a. bereitgestellt wird und keine Kontaminationsprobleme aufwirft.

Anhand der Zeichnung wird die Erfindung näher erläutert.

Es zeigen:
- Fig. 1: schematisch die Ausführung mit Spiralfeder;
- Fig. 2: schematisch die Ausführung mit Fluid-Kolben und -Zylindern.

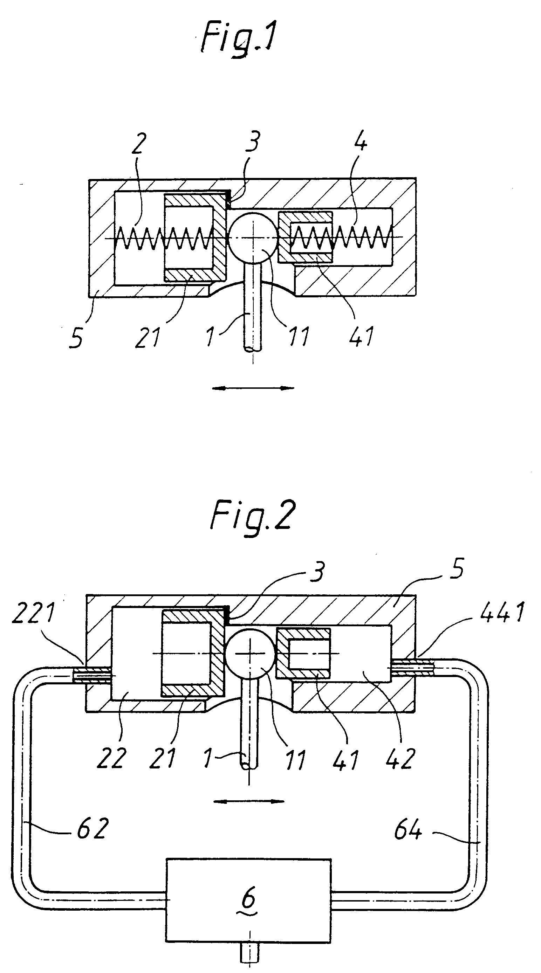

In Fig. 1 ragt ein Mitnehmer 1 mit einer Kugel 11 an seinem Ende in ein Gehäuse 5, in dem eine Schraubenfeder 2 mit einer Federkraft 2F ein Druckstück 21 gegen einen Anschlag 3 drückt. Das Druckstück 21 trägt Führungsflächen zur kippfreien Führung im Gehäuse 5 und hat eine im wesentlichen ebene Druckfläche, die dem Anschlag 3 und der Kugel 11 gegenüberliegt.

Auf der gegenüberliegenden Seite der Kugel 11 ist eine zweite Schraubenfeder 4 mit halb so großer Federkraft F wie die erste Schraubenfeder 2 angeordnet. Sie beaufschlagt ein zweites Druckstück 41, das stets mit der Kugel 11 Berührung hat.

Wichtig ist, daß in Grundstellung der Zentriereinrichtung, bei der zugleich das Druckstück 21 mit dem Anschlag 3 und der Kugel 11 und letzere mit dem Druckstück 41 Berührung haben, die Federkraft der ersten Schraubenfeder 2 doppelt so groß wie und entgegengesetzt zur Federkraft der zweiten Schraubenfeder 4 ist.

Bei einer Auslenkung der Kugel 11 nach rechts zur zweiten Schraubenfeder 4 hin, löst sich die Kugel 11 vom Druckstück 21, welches vom Anschlag 3 zurückgehalten wird, und es wirkt die Rückstellkraft der zweiten Schraubenfeder 4.

Bei einer Auslenkung der Kugel 11 nach links zur ersten Schraubenfeder 2 hin übt diese die doppelte Rückstellkraft aus. Da das zweite Druckstück 41 jedoch nicht durch einen Anschlag begrenzt ist, wirkt dieser die Federkraft der zweiten Schraubenfeder 4 entgegen, so daß effektiv die Differenz der beiden Federkräfte wirkt, also die gleich große Rückstellkraft wie bei der Auslenkung nach rechts.

Mit vorgespannten Federn 2 und 4 funktioniert das genauso, wenn die Federkräfte in Grundstellung für die erste Feder 2 doppelt so groß wie für die zweite Feder 4 gewählt werden, in gewissem Rahmen für kleine Auslenkungen ist die Rückstellkraft dann konstant und von den Federkonstanten unbeeinflußt.

Der Anschlag 3 ist als einfache Anschlagsfläche dargestellt. Eine Ausführung mit Dreipunktkontakt, z. B. durch Kugeln, ist jedoch genauso sinnvoll.

In Fig. 2 ist die Ausführung mit fluidtechnischen Rückstellmitteln dargestellt.

Die Druckstücke 21 und 41 sind als Kolben ausgeführt und laufen in Zylindern 22 und 42, welche im Gehäuse 5 angebracht sind. Über Einlässe 221 und 421 und Druckleitungen 62 und 64 stehen diese mit einem gemeinsamen Druckbehälter 6 in Verbindung. Der Druckbehälter 6 ist an Speise- und Steuer- oder Regeleinrichtungen bekannter und nicht dargestellter Art angeschlossen.

Als Fluid ist Druckluft mäßigen Drucks, wie sie bei Koordinatenmeßmaschinen u.a. für Luftlager bereitgestellt wird, vorteilhaft. Die Kolben-Zylinder-Abdichtungen müssen dann nicht besonders dicht sein, bzw. können gezielt in bekannter Weise als durchströmte Luftlager ausgebildet werden, ohne daß Kontaminationsprobleme durch das Fluid auftreten. Natürlich ist aber auch die Verwendung von Hydraulikflüssigkeiten möglich. Probleme mit Reibung und Verkantung werden mit kugelförmigen Kolben vermieden.

Mitnehmer 1 mit Kugel 11 und Anschlag 3 sind wie in Fig 1 ausgeführt. Der vom Fluid als Druckmittel beaufschlagte Querschnitt des ersten Kolbens 21 ist doppelt so groß wie der entsprechende Querschnitt des zweiten Kolbens 41.

Bei einer Auslenkung des Mitnehmers 1 nach rechts wirkt auf die Kugel 11 als Rückstellkraft das Produkt aus dem Druck des Fluids und der Querschnittsfläche des Druckstücks 41. Das Druckstück 21 ist dabei durch den Anschlag 3 festgelegt und wirkungslos.

Bei einer Auslenkung des Mitnehmers 1 nach links wirkt auf die Kugel 11 als Rückstellkraft das Produkt aus dem gleichen Druck des Fluids und der doppelt so großen Querschnittsfläche des Druckstücks 21. Dieser entgegen wirkt die volle Kraft des Druckstücks 41, das nicht durch einen Anschlag aufgehalten wird und der Kugel 11 nachgedrückt wird.

In der Summe der Wirkungen beider Druckstücke 21 und 41 ergibt sich die entgegengesetzt gleichgroße Rückstellkraft wie bei der Auslenkung des Hebels nach rechts.

Ohne weiteres kann die Rückstellkraft auch im Betrieb verändert werden durch Veränderung des Drucks im Druckbehälter 6. An die Druckstabilität sind dabei nur geringe Anforderungen gestellt, da sie nur proportional auf den Betrag der Rückstellkräfte wirkt, nicht aber die hysteresefreie Festlegung der Grundstellung berührt.

Überhaupt sind an die Genauigkeit aller Teile nur mäßige Genauigkeitsanforderungen zu stellen, im wesentlichen muß eine ruckfreie Beweglichkeit der Druckstücke 21 und 41 gewährleistet sein.

Verschleiß an Kugel 11, Anschlag 3 und den Druckstücken 21 und 41 führt zwar eventuell zu Verlagerungen der Grundstellung, nicht aber zu einer zunehmenden Hysterese, oder extrem zum Wackeln, da diese stets kraftschlüssig bestimmt ist.

## Patentansprüche

1. Zentriereinrichtung für den Taststift in einem mechanischen Tastkopf mit einem mit dem Taststift verbundenen Mitnehmer (1,11) und mit zwei in gegensätzlichen Richtungen darauf wirkenden Rückstellmitteln (2,21; 4,41), **dadurch gekennzeichnet**, daß nur ein, auch mehrteiliger, Anschlag (3) für ein Rückstellmittel (2,21) vorgesehen ist und das im Ruhezustand an den Anschlag (3) anliegende Rückstellmittel (2,21) zumindest nahe dem Ruhezustand eine doppelt so große Rückstellkraft auf den Mitnehmer (1,11) ausübt wie das zweite Rückstellmittel (4,41).

2. Zentriereinrichtung nach Anspruch 1, **dadurch ge****kennzeichnet**, daß die Rückstellmittel Federn (2,4) sind.

3. Zentriereinrichtung nach Anspruch 2, **dadurch gekennzeichnet**, daß die Federn (2,4) Schraubenfedern sind.

4. Zentriereinrichtung nach Anspruch 1, **dadurch ge****kennzeichnet**, daß die Rückstellmittel Fluidkolben (21,41) in Fluidzylindern sind.

5. Zentriereinrichtung nach Anspruch 4, **dadurch ge****kennzeichnet**, daß der Querschnitt des gegen den Anschlag wirkenden Fluidkolbens (21) doppelt so groß wie der Querschnitt des zweiten Fluidkolbens (41) ist und beide Zylinder an ein gemeinsames Druckreservoir (6) angeschlossen sind.

6. Zentriereinrichtung nach Anspruch 4, **dadurch ge****kennzeichnet**, daß die Fluidkolben (21,41) in den Zylindern fluidisch gelagert sind.

7. Zentriereinrichtung nach Anspruch 4, **dadurch ge****kennzeichnet**, daß das Fluid Druckluft ist.

## Claims

1. Alignment device for the probe pin in a mechanical probe with a driver (1, 11) connected to the probe pin and with two resetting means (2, 21: 4, 41) acting in opposing directions, characterised in that, only one stop (3) (including where it consists of more than one part) is provided for one resetting means (2, 21) and that the resetting means (2, 21) resting against the stop (3) in the at-rest position exerts at least when close to the at-rest position a restoring force to the driver (1, 11) which is equal to twice that of the second resetting means (4, 41).

2. Alignment device in accordance with Claim 1, characterised in that the restoring media are springs (2,4).

3. Alignment device in accordance with Claim 2, characterised in that the springs (2,4) are coil springs.

4. Alignment device in accordance with Claim 1, characterised in that the restoring means, are fluid pistons (21,42) in fluid cylinders.

5. Alignment device in accordance with Claim 4, characterised in that the cross section of the fluid piston (21) acting against the stop has a cross sectional area which is twice that of the second fluid piston (42) and both cylinders are connected to a common pressure reservoir (6).

6. Alignment device in accordance with Claim 4, characterised in that the fluid pistons (21,41) are supported on fluid in the cylinders.

7. Alignment device in accordance with Claim 4, characterised in that the fluid is compressed air.

## Revendications

1. Dispositif de centrage pour un palpeur mécanique avec un entraînement (1,11) raccordé au palpeur et avec deux rappels (2, 21; 4, 41) agissant dans le sens contraire, **caractérisé par le fait** qu'une seule butée (3), même en plusieurs parties, n'est prévue pour un rappel (2, 21) et que les rappels (2, 21) se trouvant à l'état de repos sur la butée (3), au moins presque à l'état de repos, exercent sur l'entraîneur (1, 11) une force de rappel deux fois aussi importante que celle du deuxième rappel (4.41).

2. Dispositif de centrage selon la revendication 1, **caractérisé par le fait** que les rappels sont des ressorts (2.4).

3. Dispositif de centrage selon la revendication 2, **caractérisé par le fait** que les ressorts (2,4) sont des ressorts à boudin.

4. Dispositif de centrage selon la revendication 1, **caractérisé par le fait** que les rappels sont des pistons fluidiques (21, 41) dans des vérins fluidiques.

5. Dispositif de centrage selon la revendication 4, **caractérisé par le fait** que la section du piston fluidique (21) agissant contre la butée est deux fois plus grande que celle du deuxième piston fluidique (41) et que les deux vérins sont raccordés à un réservoir de pression commun (6).

6. Dispositif de centrage selon la revendication 4, **caractérisé par le fait** que les pistons fluidiques (21,41) sont logés fluidiquement dans les vérins.

7. Dispositif de centrage selon la revendication 4, **caractérisé par le fait,** que le fluide est de l'air comprimé.
